# DEMANDE DE BREVET EUROPEEN

(11) **EP 0 790 442 A1**
(43) Date de publication de la demande: **20.08.1997**
(21) Numéro de dépôt: 97420022.2
(22) Date de dépôt: 11.02.1997
(51) Int. Cl.: F16H 61/28

(54) **Dispositif d'asservissement d'un levier de commande d'une boîte de vitesses pour véhicules automobiles**

(30) Priorité: 19.02.1996 FR 9602221
(71) Demandeur: ADWEST OCI SA, 42350 La Talaudière (FR)
(72) Inventeur: Gaillard, Jean, 42100 Saint-Etienne (FR)
(74) Mandataire: Thivillier, Patrick

(57) **Abrégé**

Le dispositif s'applique à un levier de commande d'une boîte de vitesses pour véhicule automobile, ledit levier (L) étant relié à la boîte (BV) par un système de commande et/ou de sélection. Selon l'invention, le dispositif comprend en combinaison :
- un moyen (1) apte à mesurer l'effort appliqué digitalement sur une partie du levier (L) et correspondant à la sélection et au passage d'une vitesse,
- un ensemble (2) apte à délivrer un signal électrique proportionnel à l'effort appliqué, pour commander un organe actionneur (4) accouplé à au moins un élément de la chaîne cinématique de sélection et/ou de passage des vitesses.

## Description

L'invention se rattache au secteur technique des accessoires pour véhicules automobiles, notamment des boîtes de vitesses.

Plus particulièrement, l'invention s'applique à tous types de boîtes de vitesses à commande manuelle, au moyen d'un levier agencé pour agir sur un système de commande à barre ou à câbles pour le passage et la sélection des vitesses, en combinaison avec des éléments de renvoi et autres, coopérant avec des parties déterminées de la boîte de vitesses. Un effort provoqué sur le levier, notamment sur le pommeau qui équipe généralement ce type de levier, provoque le déplacement du système de commande.

Afin de réduire les efforts appliqués sur le levier correspondant aux passages des vitesses, la liaison du levier avec le système de commande, s'effectue par une démultiplication appropriée. Cette démultiplication engendre une course de débattement du levier relativement importante. Or, compte-tenu de l'architecture interne des véhicules et de la présence de nombreux accessoires, cette course importante du levier de commande pose de réels problèmes. En effet, lors du déplacement du levier correspondant au passage et à la sélection des vitesses, celui-ci est susceptible d'entrer en contact avec les accessoires et équipements que présente, d'origine, l'habitacle du véhicule. Il est donc apparu important de pouvoir diminuer la course du levier de commande.

Toutefois, si l'on diminue la course du levier sans apporter de changement au niveau de la cinématique de commande de la boîte de vitesses, il en résulte une augmentation de l'effort à appliquer sur le levier. Cette augmentation est inversement proportionnelle à la diminution de course.

En résumé, soit le passage des vitesses s'effectue facilement, c'est-à-dire avec un faible effort sur le levier mais, dans ce cas, la course du levier est relativement importante, soit inversement la course du levier est réduite mais, dans ce cas, le passage de vitesse est plus difficile.

Par le brevet EP-0658707, on connaît un dispositif de commande d'une boîte de vitesses comprenant notamment un levier de changement de vitesses monté avec capacité d'articulation dans l'habitacle du véhicule, en étant équipé, à l'une de ses extrémités, d'un pommeau. Dans ce brevet, le pommeau est monté avec capacité de déplacement par rapport au levier de changement de vitesses. Le déplacement transversal du pommeau à pour effet d'activer des actionneurs électriques pour provoquer de manière concomitante, la sélection d'une vitesse. La fonction remplie par le déplacement du pommeau n'est pas de mesurer un effort appliqué sur ce dernier, mais de commander des moyens actionneurs pour assurer la sélection des vitesses.

Le but recherché dans ce brevet est de permettre un déplacement du levier dans un volume relativement faible, en supprimant notamment les tringleries de commande des organes mobiles de sélection en les remplaçant par des moyens actionneurs du type électriques par exemple.

Ce brevet ne donne donc à l'homme du métier, aucun renseignement pour faciliter le passage des vitesses, en fonction de l'effort appliqué sur le pommeau.

L'invention s'est fixée pour but de remédier à ces inconvénients, de manière simple, sûre, efficace et rationnelle.

Le problème que se propose de résoudre l'invention, est de pouvoir réduire la course du levier de commande de la boîte de vitesses, sans pour autant augmenter l'effort nécessaire à appliquer sur le levier, pour le passage et/ou la sélection de ces vitesses.

Notamment, le problème que se propose de résoudre l'invention, est de créer, une assistance pour le passage et/ou la sélection des vitesses, en ayant pour objectif de créer une assistance qui soit proportionnelle aux efforts que le conducteur souhaite appliquer sur le levier de commande.

Pour résoudre un tel problème, il a été conçu et mis au point un dispositif d'asservissement du levier de commande qui comprend en combinaison :
- un moyen apte à mesurer l'effort appliqué digitalement sur une partie du levier et correspondant à la sélection et au passage d'une vitesse,
- un ensemble apte à délivrer un signal électrique proportionnel à l'effort appliqué, pour commander un organe actionneur accouplé à au moins un élément de la chaîne cinématique de sélection et/ou de passage des vitesses.

Pour résoudre le problème posé de tenir compte de la force exercée par le conducteur sur le levier, le moyen de mesure de l'effort appliqué est constitué par un capteur de forces, disposé soit au niveau du pommeau du levier de commande, soit au niveau de la tige du levier de commande.

Un autre problème que se propose de résoudre l'invention, est d'obtenir une assistance qui soit instantanée, c'est-à-dire que cette assistance cesse immédiatement lorsque le levier n'est plus soumis à un effort.

Pour résoudre un tel problème, l'ensemble est constitué par un circuit amplificateur, alimenté par une source d'énergie électrique extérieure, et assujetti au capteur, le signal délivré par ledit circuit amplificateur étant appliqué à l'organe actionneur. La source d'énergie électrique extérieure est constituée par la batterie du véhicule.

Avantageusement, l'organe actionneur est un moteur.

Dans une forme de réalisation, le moteur est accouplé par un système de transmission à un élément de renvoi relié aux moyens de commande de la boîte de vitesses actionnés par le levier, ledit élément de renvoi étant accouplé à une partie de la boîte pour le passage et/ou la sélection des vitesses.

L'invention est exposée, ci-après plus en détail à l'aide des dessins annexés, dans lesquels :

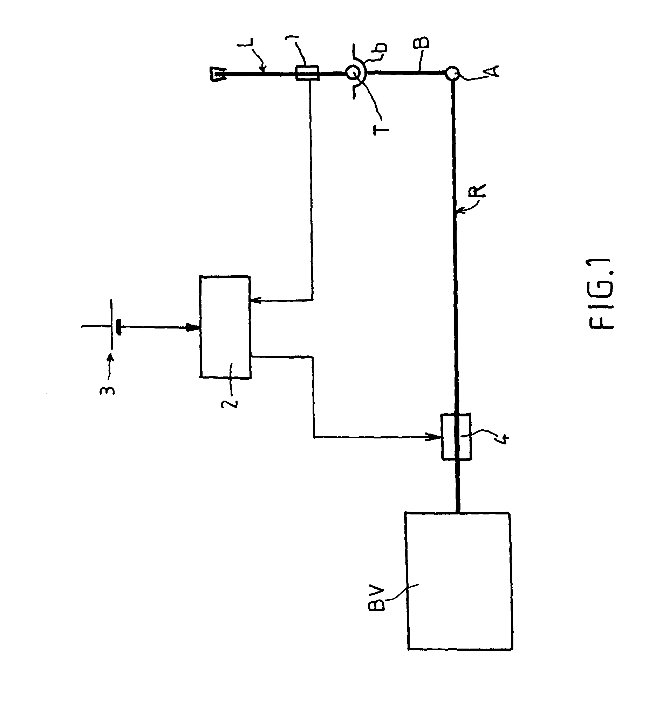

La figure 1 montre le synoptique du principe du dispositif d'asservissement selon l'invention.

La figure 2 est une vue à caractère schématique, d'un exemple de réalisation nullement limitatif du dispositif selon l'invention.

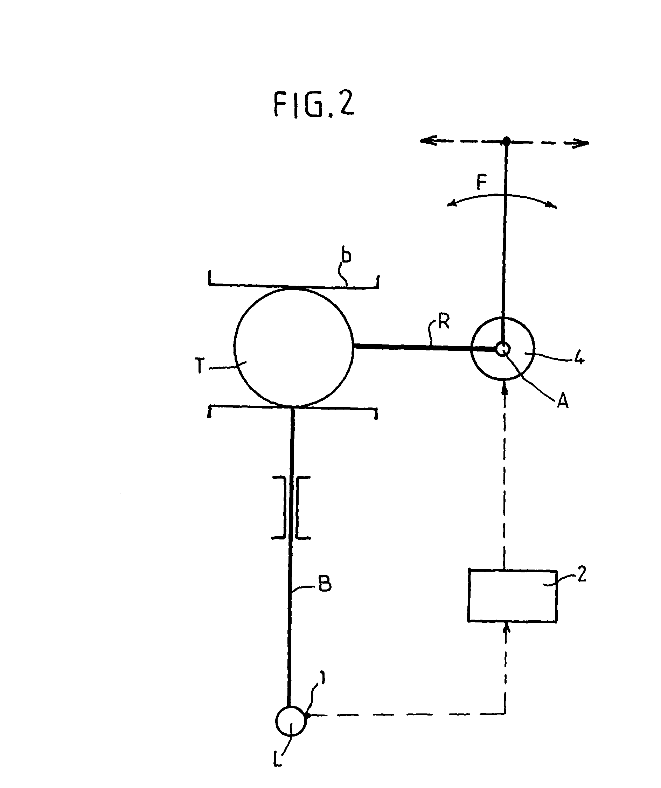

Pour une meilleure compréhension de la suite de la description, on a illustré, figure 2, un schéma de principe de fonctionnement d'une commande de boîtes de vitesses (BV), du type monobarre. Il est bien entendu, sans pour cela sortir du cadre de l'invention, que le dispositif s'applique à tous types de commande pour le passage et la sélection des vitesses, c'est-à-dire que le dispositif s'applique indifféremment pour des commandes à barre ou à câbles.

Dans l'exemple de la figure 2, le pied du levier de vitesses (L) est accouplé par tous systèmes connus de démultiplication, à une barre (B), dont l'autre extrémité est solidaire d'une bague transversale (b) dans laquelle est montée, avec capacité de déplacement, une tête sphérique (T) solidaire d'un élément de renvoi (R).

L'élément de renvoi (R) est relié par biellette ou autre, à une partie de la boîte, pour assurer le passage des vitesses. Généralement, l'élément de renvoi est monté avec capacité de déplacement angulaire limité, par rapport à un axe de rotation (A).

Selon l'invention, le dispositif d'asservissement comprend un moyen sous forme d'un capteur de forces (1), apte à mesurer l'effort appliqué digitalement sur une partie du levier (L) et correspondant à la sélection et au passage d'une vitesse. Le capteur de force (1), de tous types connus et appropriés, est disposé, soit au niveau du pommeau du levier de commande (L), soit au niveau de la tige du levier de commande (L). Ce capteur est monté en combinaison avec un ensemble apte à délivrer un signal électrique proportionnel à l'effort appliqué, pour commander au moins un organe actionneur (4) accouplé à au moins l'un des éléments de la chaîne cinématique de sélection et/ou de passage des vitesses.

L'effort appliqué sur le levier (L), est donc transformé en signal électrique. Dans ce but, l'ensemble est constitué par un circuit amplificateur (2), alimenté par une source d'énergie extérieure (3), ledit circuit (2) étant assujetti au capteur (1). Le signal électrique délivré par le circuit (2), est appliqué à l'organe actionneur (4) qui est disposé entre le capteur (1) et la boîte de vitesses (BV).

Avantageusement, la source d'énergie (3) est constituée directement par la batterie du véhicule.

L'organe actionneur (4) est constitué par un moteur accouplé par tous moyens connus et appropriés, à un élément de la chaîne cinématique de la commande de la boîte de vitesses. Par exemple, comme le montre la figure 2, le moteur (4) est accouplé par un système de transmission, à l'élément de renvoi (R). Plus particulièrement, le moteur (4) est accouplé au niveau de l'axe (A) de l'élément de renvoi (R), pour entraîner angulairement, d'une manière concomitante, dans un sens ou dans l'autre, ledit élément (R), selon la flèche (F).

Le système de transmission entre le moteur (4) et l'élément de renvoi (R) par exemple, est fonction notamment du positionnement dudit moteur, de sorte que cette transmission peut être linéaire ou rotatoire.

Il apparait donc que le signal électrique amplifié, issu du circuit (2), est appliqué au moteur (4) afin de transformer le courant, en un effort physique appliqué sur une partie de la commande de la boîte de vitesses. Dans ces conditions, les forces appliquées au niveau de l'élément concerné de la boîte de vitesses, résultent de la somme de l'effort de commande du conducteur appliqué sur le levier (L), et de l'effort fourni par le moteur (4).

L'assistance obtenue est donc proportionnelle à l'effort appliqué sur le levier de commande, étant donné que le capteur, alimenté sous une tension fixe (celle de la batterie), délivre un signal de sortie directement proportionnel audit effort. A noter également que cette proportionnalité peut être réglable en modifiant la valeur du gain de l'amplificateur.

Les avantages ressortent bien de la description, en particulier on souligne et on rappelle :
- l'arrêt immédiat de l'assistance, lorsque le conducteur cesse d'appliquer son effort sur le levier de commande,
- la proportionnalité de l'assistance en fonction de l'effort appliqué sur le levier de commande,
- la possibilité de régler cette proportionnalité,
- la possibilité de manoeuvrer le levier de commande, même en cas de coupure de l'assistance,
- la simplicité de mise en oeuvre,
- l'utilisation d'une source d'énergie qui est celle du véhicule,
- la sécurité.

## Revendications

1. Dispositif d'asservissement d'un levier de commande d'une boîte de vitesses pour véhicule automobile, ledit levier (L) étant relié à la boîte (BV) par un système de commande et/ou de sélection, caractérisé en ce qu'il comprend en combinaison :
- un moyen (1) apte à mesurer l'effort appliqué digitalement sur une partie du levier (L) et correspondant à la sélection et au passage d'une vitesse,
- un ensemble (2) apte à délivrer un signal électrique proportionnel à l'effort appliqué, pour commander un organe actionneur (4) accouplé à au moins un élément de la chaîne cinématique de sélection et/ou de passage des vitesses.

2. Dispositif selon la revendication 1, caractérisé en ce que le moyen de mesure de l'effort appliqué est constitué par un capteur de forces (1), disposé au niveau du pommeau du levier de commande (L).

3. Dispositif selon la revendication 1, caractérisé en ce que le moyen de mesure de l'effort appliqué est constitué par un capteur de forces (1), disposé au niveau de la tige du levier de commande (L).

4. Dispositif selon la revendication 1, caractérisé en ce que l'ensemble est constitué par un circuit amplificateur (2), alimenté par une source d'énergie électrique extérieure (3), et assujetti au capteur (1), le signal délivré par ledit circuit amplificateur étant appliqué à l'organe actionneur (4).

5. Dispositif selon la revendication 1, caractérisé en ce que l'organe actionneur (4) est relié entre le capteur (1) et la boîte de vitesses (BV)

6. Dispositif selon la revendication 4, caractérisé en ce que la source d'énergie électrique extérieure (3) est constituée par la batterie du véhicule.

7. Dispositif selon la revendication 4, caractérisé en ce que l'organe actionneur est un moteur (4).

8. Dispositif selon la revendication 4, caractérisé en ce que le moteur (4) est accouplé par un système de transmission à un élément de renvoi (R) relié aux moyens de commande de la boîte de vitesses (BV) actionnés par le levier (L), ledit élément de renvoi (R) étant accouplé à une partie de la boîte pour le passage et/ou la sélection des vitesses.
